# EUROPEAN PATENT APPLICATION

(11) **EP 4 738 667 A1**
(43) Date of publication of application: **06.05.2026**
(21) Application number: 23915180.6
(22) Date of filing: 28.06.2023
(51) Int. Cl.: H02K 15/02

(54) **CONDUCTOR BUNDLE SEPARATION DEVICE AND CONDUCTOR BUNDLE SEPARATION METHOD**

(71) Applicant: Eishin Technology Co., Ltd, Ayase-shi, Kanagawa 252-1107 (JP)
(72) Inventor: KUBO, Chikanari, Yamato-shi, Kanagawa 242-0002 (JP)
(74) Representative: Treeby, Philip David William
(86) International application number: PCT/JP2023/023949
(87) International publication number: WO 2025/004215

(57) **Abstract**

A conductor bundle 4M firmly bonded in the slot 2b is separated without causing deformation of a silicon steel plate and without chucking the processed stator 1A with excessive force.

A conductor bundle separation device 6 for separating a conductor bundle 4M from a stator 1 having a stator core 2 having a central hole 2a and a plurality of slots 2b around the central hole 2a, and the conductor bundle 4M bonded in the slot 2b, comprising a press unit 30 having a stay 33, a press rod 34 which is driven up and down by a press actuator 31 on the upper part of the stay 33, and an abutment 37 on the lower part of the stay 33, the abutment 37 having a hollow portion 37a through which the conductor bundle 4M positioned on the axis L of the press rod 34 can pass, wherein with the slot 2b being aligned with the axis L, and the lower surface of the stator core 2 being supported by the abutment 37, the press rod 34 is inserted into the slot 2b by driving the press actuator 31.

## Description

### [Technical Field]

The present invention relates to a conductor bundle separation device and a conductor bundle separation method for separating a conductor bundle from a stator, the stator having a stator core in which a central hole and slots around the central hole are formed, and a conductor bundle bonded in the slots.

### [Background of the Invention]

There are four major categories of electric vehicles, which are collectively referred to as xEV. Among them, the hybrid car was marketed first, and 20 years have already passed since its product release, and now the establishment of the recycling technique of xEV is becoming a big problem. Dismantling and recycling of batteries and xEV motors is a major challenge, which differs from conventional dismantling and recycling of automobiles.

No technological method has been established for the dismantling and recycling of xEV motors. Therefore, the dismantling of motors for household appliances will be explained first as a reference.

Since the enactment of the Home Appliance Recycling Law, the dismantling technology of cooling compressor motors (hereinafter referred to as black motors) for refrigerators and air conditioners for household or business use, water supplies, vending machines and the like, has evolved. The most valuable resource after the dismantling of the black motor is the coiled conductor (mainly copper wire).

The black motor is a device for compressing a refrigerant gas to a high pressure, and the motor and the compressor are integrally sealed in a welded iron container called a shell. The input and output from the shell are only gas inlet ports, discharge ports, and electrical leads, whereby the shell is completely sealed to prevent gas leakage. For this reason, it is not easy to dismantle it.

In general, there is a method comprising crushing iron, copper, silicon steel plate, aluminum, and a magnet containing rare earth in some cases by a crusher, and then sorting. However, since the black motor is extremely sturdy, the blade of the crusher is not long lasting. Also, it is not always possible to distinctly sort because the conductor is sturdy. Moreover, complete separation is difficult because copper powder is adhered to the iron piece, for example.

Another method comprises fusion cutting or mechanically cutting the shell of the black motor to remove the contents and further break them apart. The dismantling process of the black motor is outlined below.

### First step: Shell cutting process of black motor

The rotary type black motor is cut at two points up and down, and the reciprocating type black motor is cut at one point along the circumference. As the cutting method, there are methods such as fusing by gas or plasma, cutting by machining, or cutting by biting of a rotary blade using plastic deformation.

### Second step: Separation of motor portion and compressor

The stator with the conductor wound is taken out.

### Third step: Cutting of conductor

One of the conductors exposed at both ends of the stator is cut along the stator surface.

### Fourth step: Pulling out of conductor

The stator is fixed, and the conductor exposed from the other end of the cut conductor is grasped and pulled out (drawn out).

The above is the case of the black motor. For the dismantling and recycling of xEV motor, dismantling in the first step and the second step are easy because the motor is not sealed in the welded container. The third step can be dealt with by applying the cutting machine for home appliances. The biggest problem is the fourth step.

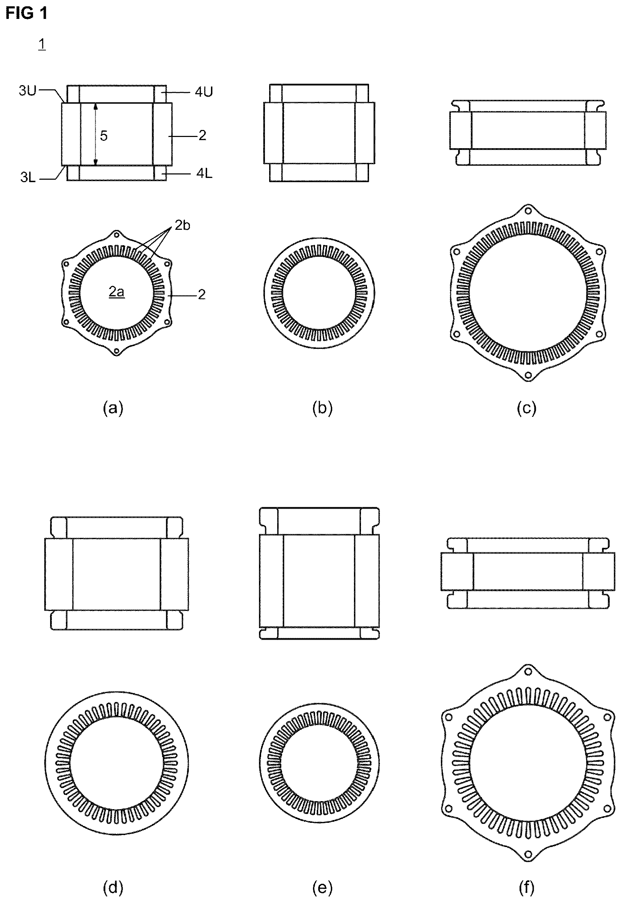

FIG. 1 (a) to (f) shows various stators 1 of xEV motors (reference numerals of the respective members of the stator 1 are attached only to FIG. 1 (a)). The stator core 2 is configured by stacking several hundred or more silicon steel plates having a thickness 0.1mm. Round conductor or corner conductor is wound in accordance with a certain law between a plurality of slots 2b, and the upper conductor 4U and the lower conductor 4L are exposed on the upper and lower stator surface 3U, 3L of the stator core 2, respectively.

In the case of round conductor, both the upper and lower conductors are fixed on the circumference by a string or the like, and in the case of square conductor, since it has no flexibility like round conductors, in both upper and lower, conductors are joined to each other by welding or the like. Corner conductors have become the mainstream of xEV motors because of their high current density.

[Patent Document 1] JP 2011-062030 JP

### [Summary of the invention]

### [Problem to be solved by the invention]

Problems in the conductor extraction method (conductor pulling-out method) from the stator will be described below.

### Problem 1

In order to withstand severe vibrations, the winding (conductor) wound around the stator core 2 of xEV motor shown in FIG. 1 is firmly fixed in the slot 2b with an adhesive or the like. Therefore, it cannot be easily pulled out like a conductor of a black motor for household appliances which is not fixed in the slot. That is, the conductor of xEV motor cannot be pulled out by the conductor pulling-out machine for the black motor.

### Problem 2

Although the stator of the black motor can be carried by hand, the stator 1 of xEV motor has a maximum 20Kg or more, and it is impossible to continuously perform operations such as moving, lifting, and reversing by hand in business, let alone experiments. xEV motors are currently mainly for passenger cars, but xEV motors for transportation trucks and the like, which are expected to become widespread over time, are expected to become larger and heavier.

In order to establish a conductor extraction method capable of solving the problem 1, two experiments were carried out.

### Experiment 1: Pulling-out Method

After cutting the winding (upper conductor 4U or lower conductor 4L) extending outside from one of the upper or lower stator surface 3U, 3L of the stator core 2 along the stator surface 3U or 3L, the circumferential 60 degrees portion of the conductor extending from the other stator surface 3U or 3L was gripped by a strong grip mechanism using a hydraulic pressure. With receiving the reaction force during pulling out while pressing several places of the stator surface 3U, 3L in the vicinity of gripping points, the grip mechanism was lifted up by the thrust of the maximal 2000Kg. At this time, the conductor slightly lifted from the stator 1, we found. It is proven that this is a gripping force and a thrust force capable of moving the conductor in the stator 1.

However, since both of the upper and lower conductors are connected circumferentially, the place to hold the stator 1 is limited, so each of the thin silicon steel plates constituting the stator 1 is separated and deformed with the movement of the conductor to narrow the width of the slot 2b, the resistance against the conductor at the time of pulling-out is rapidly increased, the conductor becomes completely immobilized, and only the deformation of the silicon steel plate is increased. Therefore, this method was found to be not useful to pull out conductors physically.

### Experiment 2: Method for pushing-out a conductor in slot 2b by pressing

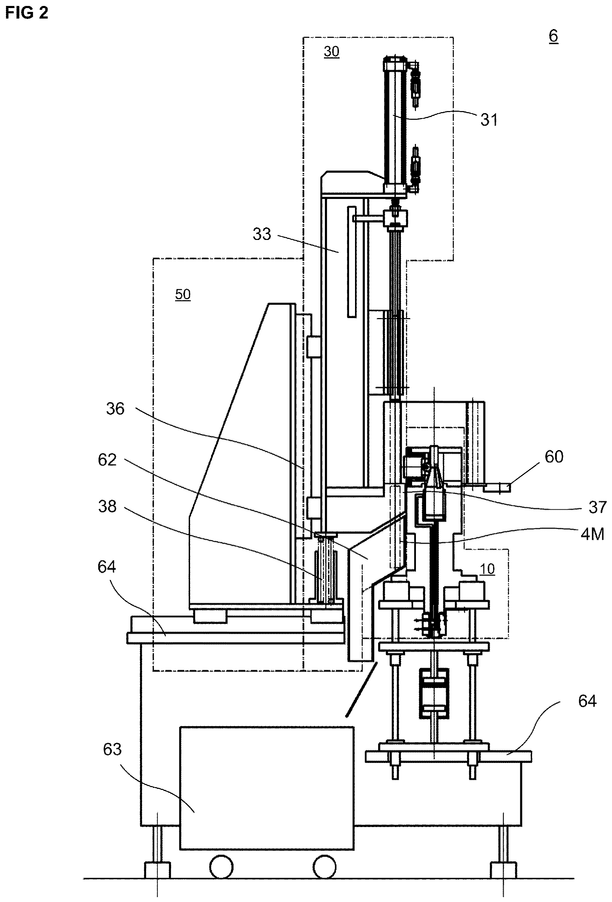

The upper conductor 4U and the lower conductor 4L at both ends of the stator 1 were cut along the stator surface 3U, 3L such that the slots 2b appeared clean. Conductor bundles 4M (not shown in FIG. 1/see FIG. 2) bonded with a resin or the like are left in the slots 2b. Hereinafter, the stator 1 subjected to such a process is referred to as a processed stator 1A. A hole larger than the slot 2b was drilled in the reference surface and the processed stator 1A was placed on the reference surface such that a slot 2b and the hole were aligned, and the press rod was hydraulically pushed in from the upper part of the slot 2b. In this case, since the periphery of the slot 2b contacts and is supported by the reference surface, the silicon steel plate is not deformed, and the conductor bundle can be pushed out by applying an appropriate force to the press rod.

Experiment 1 was performed in the 60 degree range of the processed stator 1A (the number of slots 2b is 8-12), but as in Experiment 2, it was possible to push out the conductor bundle 4M with a considerably less force for each slot 2b.

However, in the case of the above method, the following problems 3 to 6 occur.

### Problem 3

As shown in FIG. 1, the height 5 of the slot 2b is considerably greater compared to the cross-sectional dimension of the slot 2b. Therefore, when the elongated press rod is inserted into the slot 2b by a large force, the part inserted into the slot 2b is guided by the inner wall of the slot 2b so as not to bend, but when the insertion of the press rod into the slot 2b has just started, a large part of the press rod is still exposed from the slot 2b, so that the press rod may buckle due to pressurization. Experiment 2 was performed by inserting a plurality of short rods in sequence, so that buckling did not occur, but it is difficult to adopt the same method for a commercial device.

### Problem 4

When the outer diameter of the stator 1 is chucked, the entire upper and lower surfaces of the stator are shielded (occluded/blocked) by the chuck mechanism (e.g., the chuck housing), and the conductor bundle 4M in the slot 2b cannot be pressed and pushed out due to interference with the chuck mechanism. In order to maximize the magneto-efficiency, the slot 2b is close to the inner diameter of the stator 1, as shown in FIG. 1. Therefore, also when the central hole 2a is chucked from the inside, even if the chuck mechanism is slightly larger outwardly than the central hole 2a, the conductor bundle 4M pushed out by pressing interferes with the chuck mechanism.

### Problem 5

When the press rod is pushed into a predetermined slot 2b while the inner diameter or the outer diameter of the stator 1 is chucked, a pressing force is applied to the entire chuck mechanism. If the chucking force is too weak, the stator 1 may be displaced or tilted. On the other hand, if the chucking force is too strong, there arises a problem of deformation of the silicon steel plate.

### Problem 6

In order to press and push out the conductor bundle 4M in the slot 2b without deforming the silicon steel plate, an abutment which firmly supports the stator core is required around the slot. In order to separate the conductor bundle 4M from the plurality of slots, the stator needs to be rotated every time the conductor bundle 4M of the respective slots are separated, but it is not preferable that the stator contacts the abutment when rotating.

### [Means for solving the problem]

The present application discloses the following invention.

### <Embodiment 1>

A conductor bundle separation device for separating a conductor bundle from a stator, the stator including a stator core having a central hole and at least one slot therearound, and a conductor bundle bonded in said slot, said device comprising:
a press unit comprising:
   a stay,
   a press rod which is driven up and down by a press actuator on an upper part of the stay, and
   an abutment,
   wherein the abutment has a hollow portion through which the conductor bundle located on the axis of the press rod can pass, and
wherein in a state in which the slot is aligned with the axis and the lower surface of the stator core is supported by the abutment, the conductor bundle is pushed out from the slot by inserting the press rod into the slot by driving the press actuator.

### <Embodiment 2>

The conductor bundle separation device according to Embodiment 1, further comprising:
a table having an opening through which the abutment fixed to a device body can pass,
a linear guide for guiding the stay fixed to the device body up and down, and
a balance spring biasing the stay upwardly,
   wherein the stay is supported such that the upper surface of the abutment is positioned below the table by balancing between the weight of the press unit and the biasing force of the balance spring, and
wherein the biasing force of the press rod is applied to the stator on the table, whereby the abutment is raised to a position in contact with the lower surface of the stator core on the table.

### <Embodiment 3>

The conductor bundle separation device according to Embodiment 1, further comprising:
a chuck unit comprising:
   a chuck housing having an outer shape capable of passing through the central hole,
   a plurality of chuck claws slidable in a radial direction at different angular positions of the chuck housing, and
   a rotary actuator for intermittently rotating the chuck housing, and
a linear actuator that moves the chuck unit up and down between three height positions:
   an origin height at which an upper end of the chuck housing is disposed below the table;
   a first operating height at which the chuck claws can be engaged with the central hole of the stator placed on the table; and
   a second operating height above said first operating height.

### <Embodiment 4>

The conductor bundle separation device according to Embodiment 3, wherein the chuck unit comprises:
a tapered shaft movable up and down in a central shaft hole of the chuck housing,
a cam follower for driving the chuck claws radially outwardly by sliding on the tapered shaft which moves up and down, and
a fluid pressure actuator for driving the tapered shaft up and down in the shaft hole.

### <Embodiment 5>

The conductor bundle separation device according to Embodiment 4, wherein the rotary actuator further comprises:
a hollow rotating shaft, and
a drive fluid line through said hollow rotating shaft,
wherein one end of the drive fluid line is connected to the fluid pressure actuator, and
the other end of the drive fluid line is connected to a swivel joint.

### <Embodiment 6>

The conductor bundle separation device according to Embodiment 1,
wherein the press unit further comprises a guide member having a guide bore formed on the axis for guiding the press rod,
the press rod has a distal end portion and a proximal end portion having a cross-sectional shape having a larger second moment of area than the distal end portion, and
the guide bore has a cross-sectional shape through which both the distal end portion and the proximal end portion can pass.

### <Embodiment 7>

A conductor bundle separation method for separating a conductor bundle from a stator using a conductor bundle separation device,
the stator including a stator core having a central hole and at least one slot therearound and a conductor bundle bonded in said slot;
the conductor bundle separation device comprising a press unit, the press unit comprising:
   a stay,
   a press rod which is driven up and down by a press actuator on the upper part of the stay, and
   an abutment,
   wherein the abutment has a hollow portion through which the conductor bundle located on the axis of the press bar can pass, and
   wherein said method comprises, in a state in which the slot is aligned with the axis and the lower surface of the stator core is supported by the abutment, inserting the press rod into the slot by the drive of the press actuator to push out the conductor bundle from the slot.

### [Brief Description of the Drawings]

[Fig. 1] Fig. 1 shows stator constructions for various xEV motors.
[Fig. 2] Fig. 2 is a side sectional view of a conductor bundle separation device 6 according to an embodiment of the present invention.
[Fig. 3] Fig. 3 is a plan view of a conductor bundle separation device 6.
[Fig. 4] Fig. 4 shows a chuck unit 10. (a) is a plan view of a main portion. (b) is a side sectional view.
[Fig. 5] Fig. 5 shows a press unit 30 and an advancing and retracting unit 50. (a) is a plan view of a main portion. (b) is a side sectional view.
[Fig. 6] Fig. 6 is a side view and plan view of a press rod 34 and a guide member 35, and a cross-sectional view of the press rod 34 and the guide member 35 in C, D, E, and F positions.

### [Mode for carrying out the invention]

Hereinafter, a conductor bundle separation device 6 according to an embodiment of the present invention will be described.

As described above with reference to FIG. 1, a stator 1 includes a stator core 2 having a central hole 2a and a slot 2b formed around the central hole 2a, and a winding 4 wound around the slot 2b and bonded and fixed by resin or the like. A part of the winding exposed from the upper and lower surface 3U, 3L of the stator core 2 is referred to as an upper winding 4U and a lower winding 4L, respectively.

The upper winding 4U and the lower winding 4L are cut and removed from the stator core 2 by cutting process or the like of the stator 1. The resultant is referred to as processed stator 1A. In the slot 2b of the processed stator 1A, a conductor bundle 4M which is bonded and fixed by a resin or the like is left behind. The processed stator 1A is a target of the procedure of the conductor bundle separation device 6. The conductor bundle 4M is the part in which the winding 4U and the lower winding 4D is cut and removed from the winding 4. The conductor bundle 4M typically has a cross-sectional profile that is generally the same as the slot 2b. The object of the conductor bundle separation device 6 is to push out and separate the conductor bundle 4M from the slot 2b of the processed stator 1A.

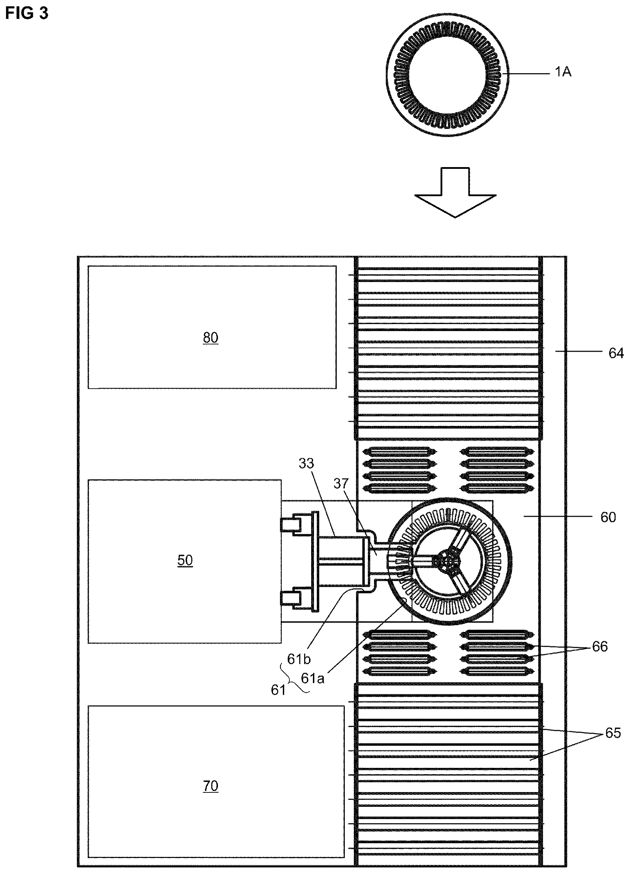

FIG. 2 and FIG. 3 show a conductor bundle separation device 6 according to an embodiment of the present invention. FIG. 2 is a side view and FIG. 3 is a plan view. The conductor bundle separation device 6 includes a device body (a body of the device) 64, a table 60, a press unit 30, and a chuck unit 10. The conductor bundle separation device 6 may further include an advancing/retreating unit 50 for driving the press unit 30 to advance/retreat, a fluid pressure unit (fluid pressure source) 70 for driving various actuators, a control panel 80 (FIG. 3), and the like.

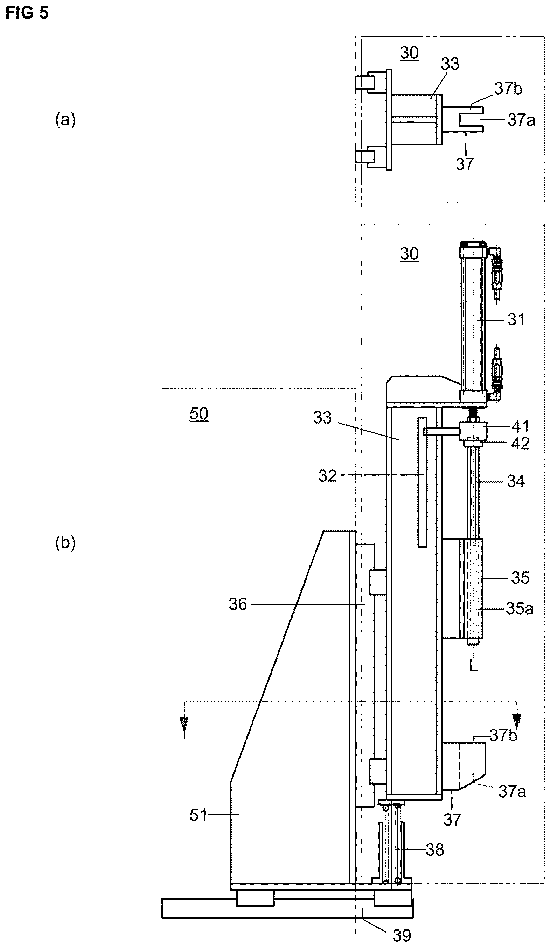

FIG. 5 shows a press unit 30. The press unit 30 includes a stay 33, a press actuator 31 fixed to an upper part of the stay 33, a press rod 34 connected to a drive shaft of the press actuator 31 via a cylinder rod joint 41 and a press rod joint 42, and an abutment (or support member) 37 projecting from a lower end of the stay 33 and having a hollow portion (or recessed/concave portion) 37a. The press rod 34 is driven up and down along an axis (drive axis) L by a press actuator 31. The stay 33 and the abutment 37 may be an integral member. The hollow portion 37a is located on the axial line L of the press rod 34 and has a shape/size through which the conductor bundle 4M can pass. In order to correspond to a plurality of types of stators 1 having slots 2b of different shapes/sizes, the hollow portion 37a may be of a shape/size through which any of the conductor bundle 4M in the plurality of shapes/sizes of slots 2b can pass. In FIG. 5, a straight hollow portion 37a is shown, but the hollow portion 37a may be curved, bent, or the like in the middle.

The advancing/retreating unit 50 may include a linear guide 39 fixed to the device body 64, a base 51 capable of sliding on the linear guide 39 back and forth, and a vertical linear guide 36 attached to the base 51, and the stay 33 of the press unit 30 may be slidable up and down on the linear guide 36.

The press unit 30 may include a linear position sensor 32 for detecting the position of the stay 33 on the linear guide 36. The advancing/retreating unit 50 may include an actuator for sliding drive of the base 51 and a sensor for position detection of the press unit 30.

The conductor bundle separation device 6 may further include a balance spring 38 inserted between the linear guide 39 and the stay 33. That is, the stay 33 is vertically guided by the linear guide 36 and is biased upwardly by the balance spring 38. Therefore, the press unit 30 in the unloaded state is stopped at a height position (balance position) where the weight of the press unit 30 and the biasing force of the balance spring 38 are balanced, and is movable up and down from the balance position with a small external load. In the conductor bundle separation device 6 of the present embodiment, dimensions, strength, and the like of the balance spring 38 and the like are set such that the upper surface 37b of the abutment 37 is positioned lower than the table 60 (reference point Hr) when the press unit 30 is in the balance position.

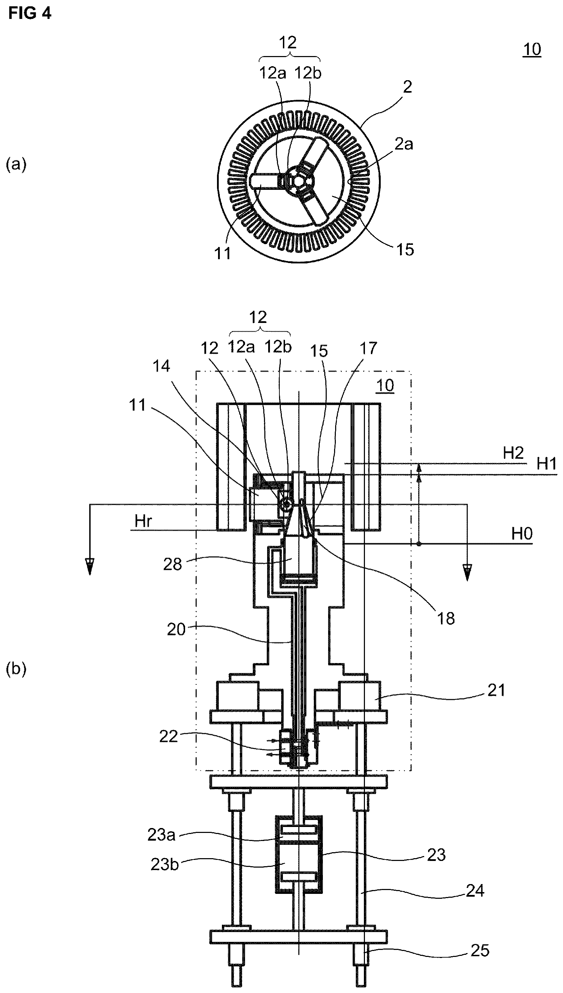

As shown in FIG. 3, an opening 61 is formed in the table 60. The opening 61 may have a shape/size that allows the chuck housing 15 (FIG. 4) or further the abutment 37 (or the abutment 37 and the stay 33) to pass therethrough. The opening 61 may have a circular part 61a through which the chuck housing 15 passes and an additional part 61b through which the abutment 37 (or the abutment 37 and the stay 33) passes. Rollers 65 and 66 are provided on the table 60, and the processed stator 1A is movable on the table 60 as indicated by the arrows in FIG. 3 with a small force.

FIG. 4 shows the chuck unit 10. The chuck unit 10 includes a chuck housing 15 having an outer shape capable of passing through a central hole 2a of the processed stator 1A, a chuck claw 11 slidable in a groove extending radially at different angular positions of the chuck housing 15, and a rotary actuator 21 for intermittently rotating the chuck housing 15. The chuck unit 10 can engage with the central hole 2a by sliding the chuck claw 11 radially outwardly to grip the processed stator 1A. FIG. 4 shows an example of a three-way chuck having three chuck claws 11 arranged at intervals of 120 degrees, but the angular interval and the number of chuck claws 11 can be changed. Since the inner diameters of the central hole 2a may be different for each type of the stator 1, the chuck claws 11 or the tips of the chuck claws 11 may be interchangeable depending on the inner diameters of the central hole 2a.

The conductor bundle separation device 6 may further include a linear actuator 23 that drives the chuck unit 10 up and down. The linear actuator 23 can move a chuck unit 10 between the following three heights HO to H2:
- origin height HO in which the upper end of the chuck housing 15 is located below the table 60,
- first operating height H1 in which the chuck claw can be engaged with the central hole 2a of the processed stator 1A placed on the table 60, and
- second operating height H2 above the first operating point.

In the drawing, Hr indicates the height position (reference point Hr) of the surface of the table 60. The origin height HO is a position slightly below the reference point Hr.

For stabilizing, ensuring and/or facilitating the control of the movements of the chuck unit 10 between the three heights HO to H2, the linear actuator 23 is preferably a dual cylinder in which two linear cylinder 23a, 23b are connected in tandem.

In order to stabilize the operation of the linear actuator 23, a guide rod 24 supporting the chuck unit 10 and a linear bush 25 guiding the guide rod 24 may be provided.

The chuck unit 10 may further include a tapered shaft 17 that can move up and down in a shaft hole formed in the center of the chuck housing 15, a cam follower 12 that slides on the tapered shaft 17 to drive the chuck claws 11 radially outwardly, and a fluid pressure actuator 28 that drives the tapered shaft 17. The fluid pressure may be, for example, hydraulic or pneumatic, and is particularly preferably pneumatic. The chuck unit 10 may further include a return spring 14 that biases the chuck claws 11 radially inwardly.

When the tapered shaft 17 is raised by the driving of the fluid pressure actuator 28, the cam follower 12 slides on the tapered shaft 17, and the chuck claws 11 are driven radially outwardly. When the tapered shaft 17 is lowered, the chuck claws 11 are driven radially inwardly by the biasing force of the return spring 14.

The cam follower 12 may have a roller 12a that slides and rotates on the tapered shaft 17, and a rotary shaft 12b that supports the roller 12a and is supported by the chuck claw 11 at both ends. The tapered shaft 17 may have an inclined plane 18 at a position corresponding to the roller 12a of each the chuck claws 11. The sliding of the roller 12a on the inclined plane 18 improves the sliding stability.

The rotary actuator 21 may have a hollow rotating shaft, through which the drive fluid line 20 passes. The drive fluid line 20 may connect one end to the fluid pressure actuator 28 and the other end to the swivel joint 22. As a result, the fluid pressure control is realized by the simple structure of the fluid pressure actuator 28 moving in rotation and up and down. The swivel joint 22 may be connected to the fluid pressure unit 70 (FIG. 3).

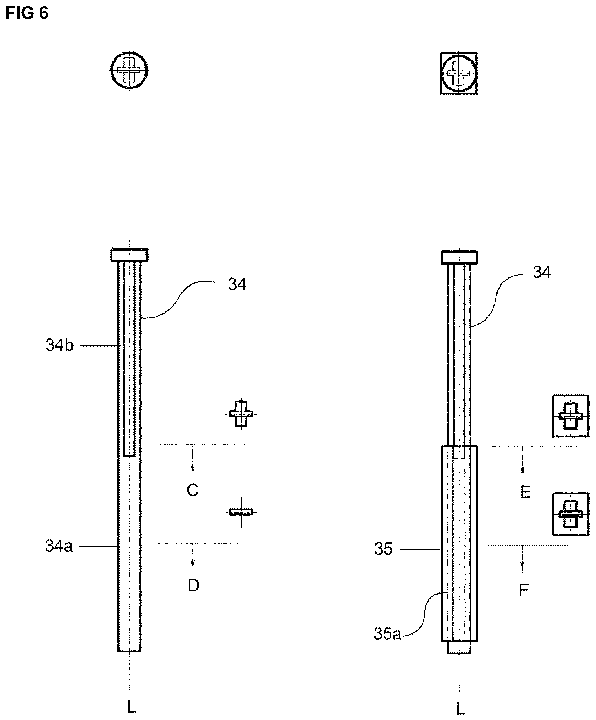

The press unit 30 may further include a guide member 35 at an intermediate height position of the stay 33. The guide member 35 may be fixed to the stay 33. FIG. 6 shows a side view and a plan view of the press rod 34 and the guide member 35 in a preferred form and cross-sectional views of the press rod 34 and the guide member 35 in a C, D, E, and F positions.

The press rod 34 may have a distal end portion 34a and a proximal end portion 34b having a cross-sectional shape with a larger second moment of area (sectional secondary moment) than the distal end portion 34a. In the illustrated example, the press rod 34 has a shape (for example, a flat shape) in which the distal end portion 34a can be inserted into the slot 2b, and the proximal end portion 34b has a shape (for example, a cross-shaped shape) in which the second moment of area is larger than that of the distal end portion 34a.

The guide member 35 may have a guide bore 35a for guiding the press rod 34. The guide bore 35a may be located on the axial line L of the press rod 34. The guide bore 35a preferably has a cross-sectional shape that allows both the distal end portion 34a and the proximal end portion 34b of the press rod 34 to pass therethrough.

The press bar 34 may buckle since the press bar 34 descends and abuts the stator 1 and also an axial force acts on the press bar 34 as the press bar 34 is inserted into the slot 2b. However, in the above-described press unit 30, the distal end portion 34a is guided in the guide bore 35a, and further, the proximal end portion 34b has a large second moment of area, so that buckling of the press rod 34 can be prevented. The length of the distal end 34a may be approximately equal to or slightly greater than the height 5 of the stator core 2. The length of the guide member 35 may be approximately equal to the height 5 of the stator core 2.

In order to handle a plurality of types (models) of processed stator 1A having differing slot shapes, the distal end portion 34a may have a shape and a size that can be inserted into any of the slots 2b of the various processed stator 1A. For example, the distal end 34a may be shaped and sized to be inserted into any of the slots 2b of the various processed stator 1A.

In FIG. 6, supposing a rectangular slot 2b (FIGS. 1a to c), the shape of the press rod 34 and the guide bore 35a in the shape of the combination of the rectangles are shown, but the shape of the press rod 34 and the guide bore 35a can be changed accordingly in the case of the slot 2b of other shapes (FIGS. 1d to f).

The conductor bundle separation device 6 may include a control device (not shown) configured by a computer, a storage medium, or the like, for controlling the operation by the computer.

Hereinafter, a conductor bundle separation method (an operation method of the conductor bundle separation device 6) according to an embodiment of the present invention will be described.

### Preparation

Step 1: The chuck unit 10 is supported by the rotary actuator 21 in the origin height HO such that the upper end of the chuck housing 15 is positioned below the table 60.

Step 2: Strength and the like of the balancing spring 38 are adjusted such that the upper surface 37b of the abutment 37 is positioned slightly below the table 60.

Step 3: The press unit 30 is retracted on the linear guide 39 to a position farthest from the chuck unit 10.

Step 4: The press rod 34 and the guide member 35 appropriate for the type of the processed stator 1A to be processed are attached to the leading end of the press actuator 31 via the cylinder rod joint 41 and the press rod joint 42.

Step 5: It is advantageous that the drive distance or the like of the press actuator 31 corresponding to the press start position of the press rod 34 and the height 5 of the stator 1 is stored in advance in a storage medium or the like.

By the above steps 1 to 5, the processed stator 1A can be freely moved on the table 60 without interfering with the members such as the chuck housing 15, the abutment 37, and the press rod 34 (see the arrow in FIG. 3).

### Loading, alignment, etc.

Step 6: The processed stator 1A is slid on the table 60 to be positioned in the opening 61a.

Step 7: The chuck unit 10 is raised to the first operating height H1 by driving the linear actuator 23. As a result, the chuck claws 11 raise to a height capable of chucking the center hole 2a.

Step 8: The tapered shaft 17 is raised by the drive of the fluid pressure actuator 28. As a result, the chuck claws 11 moves radially outwardly and comes into contact with the inside of the center hole 2a of the processed stator 1A, so that the processed stator 1A is chucked.

Step 9: The chuck unit 10 is raised to the second operating height H2 by the drive of the linear actuator 23. As a result, the processed stator 1A is spaced apart from the table 60. Therefore, the processed stator 1A can be freely rotated without interfering with the table 60.

Step 10: Following the linear guide 39, the press unit 30 is advanced to a predetermined position according to the type of the processed stator 1A. Fine tuning may be performed manually. When the rotational position of the processed stator 1A is shifted (not aligned), the rotary actuator 21 is rotated such that the slot 2b is positioned on the axial line L. The rotation may be manual and the determination of the alignment may be visual.

### Separation by pushing-out of conductor bundle 4M

Step 11: The press rod 34 is lowered by the drive of the press actuator 31 according to the following steps 11-1 and 11-2.

Step 11-1: When the press rod 34 is lowered, the leading end thereof contacts the conductor bundle 4M, and the downwardly biasing force by the press actuator 31 acts on the processed stator 1A, the press unit 30 is raised along the linear guide 36 by the biasing force. Since the press unit 30 is supported in a state in which its weight and the biasing force of the balance spring 38 are balanced, it moves upwardly with a slight force. Therefore, the press rod 34 does not descend, and the position (contact position) where the leading end of the press rod 34 comes into contact with the conductor bundle 4M can be maintained. During this time, little force is applied to the processed stator 1A and the chuck claws 11.

Step 11-2: When the upper surface 37b of the abutment 37 abuts against the lower surface of the stator core 2, the raising of the press unit 30 ends, and instead, the lowering of the press rod 34 from the contacting position starts. Since the lower surface of the stator core 2 is supported by the upper surface 37b of the abutment 37 and cannot be moved downwardly, the press rod 34 penetrates into the slot 2b, and the conductor bundle 4M is pushed out from the slot 2b to the hollow portion 37a. Since the periphery of the slot 2b is supported on the upper surface 37b of the abutment 37, deformation of the silicon steel plate can be prevented, thereby deformation of the slot 2b can be prevented. The pushed-out conductor bundle 4M is collected in the collection box 63 via the shooter 62 (FIG. 2).

Step 12: When the pushing-out of the conductor bundle 4M is completed, the press rod 34 is raised to the initial position by the drive of the press actuator 31. The completion of the pushing-out can be determined by measuring the height position of the press rod 34 by the linear position sensor 32 and comparing the drive distances of the press actuators 31 stored in advance for each type of processed stator 1A.

Step 13: After confirming the elevation of the press rod 34 to the initial position, the chuck unit 10 (processed stator 1A) is rotated by the drive of the rotary actuator 21 to a position where the subsequent slot 2b coincides with the axial line L of the press rod 34. As described in step 9, the processed stator 1A is freely rotatable.

Step 14: Thereafter, steps 11-13 are repeated to isolate the conductor bundle 4M of all slots 2b.

### Opening and unloading of processed stator 1A

Step 15: When the separation of the conductor bundle 4M of all the slots 2b is completed, the linear actuator 23 lowers the chuck unit 10 to the first operating height H1, and then the fluid pressure actuator 28 lowers the tapered shaft 17, thereby the chucking of the processed stator 1A by the chuck unit 10 is released, and thereafter, the linear actuator 23 lowers the chuck unit 10 to the origin height HO. Thereafter, the press unit 30 may be retracted to the retracted position on the linear guide 39.

Step 16: Using the rolling of the rollers 65 and 66, the processed stator 1A is slid on the table 60 and unloaded out of the device.

Thereafter, by repeating steps 6 to 16, the conductor bundle 4M can be separated for a plurality of processed stators 1A.

All or a part of the steps 6 to 16 can be automatically operated by controlling the actuators 21, 23, 28, 31 or the like by a control device or the like. In particular, it is preferable that the steps 11 to 15 are automated.

According to the conductor bundle separating device 6, the conductor bundle 4M is pushed out from the slot 2b by inserting the press rod 34 into the slot 2b while supporting the lower surface of the stator core 2 (the periphery of the slot 2b) with the abutment 37 having the hollow portion 37a through which the conductor bundle 4M on the axial line L of the press rod 34 can pass. Therefore, it is possible to push out and separate the wire bundle 4M firmly bonded in the slot(s) 2b without causing deformation or the like of the silicon steel plate and without chucking the treated stator 1A with an excessive force.

Further, the stay 33 is supported by the balance spring 38 such that the abutment 37 is positioned below the table 60 while the stay 33 is guided vertically by the linear guide 36, so that the processed stator 1A can be moved on the table 60 without interfering with the abutment 37, and the support of the stator core 2 by the abutment 37 during the separation by pushing-out of the conductor bundle 4M is enabled. Since the lower surface of the stator core 2 is supported by the abutment 37, the conductor bundle 4M can be pushed out and separated without applying almost any external force to the stator core 2 and the chuck claw 11.

Further, the chuck housing 15 is capable of passing through the central hole 2a, the chuck claws 11 engage from the inside to the central hole 2a to chuck the processed stator 1A, and the chuck housing 15 can be moved up and down by the linear actuator 23 between the origin height H0, first operating height H1, and second operating height H2. As a result, it is possible to prevent the shielding (occlusion/blockage) of the slot 2b by the chuck housing 15, to move the processed stator 1A on the table 60 without interfering with the chuck housing 15, and also to rotate the processed stator 1A without contacting the table 60.

Since the chuck claw 11 is driven radially outwardly by sliding the cam follower 12 on the tapered shaft which is moved vertically by the fluid pressure actuator 28 in the axial hole of the center of the chuck housing, excessive gripping force is prevented from being applied to the processed stator 1A at the time of the chucking of the processed stator 1A, whereby deformation of the silicon steel plate and the slot 2b due to excessive gripping force and difficulty in pushing out and separating the conductor bundle 4M caused thereby can be prevented. In order to prevent excessive gripping force, the fluid pressure actuator 28 is preferably pneumatic and operated at a pre-adjusted pressure.

Further, since the rotary actuator 21 is provided with a hollow rotation shaft, and the drive fluid line 20 is passed through the hollow rotation shaft, and both ends of the drive fluid line 20 are connected to the fluid pressure actuator 28 and the swivel joint 22, respectively, the working fluid can be supplied to the fluid pressure actuator 28 which moves up and down and rotates.

Moreover, the guide member 35 having a guide bore 35a is provided on the axial line L, the proximal end portion 34b of the press rod 34 has a second moment of area larger than that of the distal end portion 34a, and the guide bore 35a has a cross-sectional shape capable of passing both the distal end portion 34a and the proximal end portion 34b, whereby it is possible to prevent buckling of the press rod 34 during pushing-out of the conductor bundle 4M.

Dimensions, shapes, arrangements, numbers, materials, and the like of the conductor bundle separation device 6 and the elements described in the above embodiments are exemplary, and other aspects are possible. For example, when loading/unloading of the processed stator 1A is performed using a robot or the like, and the chuck unit 10 chucks the processed stator 1A at the loading position, the table 60, the linear guide 39, and the like can be omitted, and the chuck unit 10 does not need to be moved from the second operating height H2, so that the linear actuator 23 can also be omitted. When the processed stator 1A is rotated by a robotic tool or the like, the chuck unit 10 may be omitted.

### [Explanation of Reference numerals]

- 1: Stator
- 1A: Processed stator
- 2: Stator core
- 2a:: Central hole
- 2b: Slot (s)
- 3U, 3L:: Stator surface
- 4: Winding
- 4U:: Upper winding
- 4L:: Lower winding
- 4M: Conductor bundle
- 5: Slot height
- 6: Conductor bundle separation device
- 10: Chuck unit
- 11: Chuck claw (s)
- 12: Cam follower
- 12a: Roller
- 12b:: Rotary shaft
- 14: Return spring
- 15: Chuck housing
- 17: Tapered shaft
- 18: Inclined plane
- 20: Drive fluid line
- 21: Rotary actuator
- 22: Swivel joint
- 23: Linear actuator
- 24: Guide rod
- 25: Linear bush
- 28: Fluid pressure actuator
- 30: Press unit
- 31: Press actuator
- 32: Linear position sensor
- 33: Stay
- 34: Press rod
- 34a:: Distal end portion
- 34b:: Proximal end portion
- 35: Guide member
- 35a: Guide bore
- 36: Linear guide
- 37: Abutment
- 37a:: Hollow portion
- 37b: Surface
- 38: Balance spring
- 39: Linear guide
- 41: Cylinder rod joint
- 42: Press bar joint
- 50: Advancing and retracting unit
- 60: Table
- 61: Opening
- 61a:: Circular part
- 61b: Additional part
- 62: Shooter
- 63: Collection box
- 64: Device body
- 65, 66: Roller
- 70: Fluid pressure unit
- 80: Control panel
- H0:: Origin height
- H1:: 1st operating height
- H2:: 2nd operating height
- Hr: Reference point
- L: Axis

## Claims

1. A conductor bundle separation device for separating a conductor bundle from a stator, the stator including a stator core having a central hole and at least one slot therearound, and a conductor bundle bonded in said slot, said device comprising:
a press unit comprising:
a stay,
a press rod which is driven up and down by a press actuator on an upper part of the stay, and
an abutment,
wherein the abutment has a hollow portion through which the conductor bundle located on the axis of the press rod can pass, and
wherein in a state in which the slot is aligned with the axis and the lower surface of the stator core is supported by the abutment, the conductor bundle is pushed out from the slot by inserting the press rod into the slot by driving the press actuator.

2. The conductor bundle separation device according to claim 1, further comprising:
a table having an opening through which the abutment fixed to a device body can pass,
a linear guide for guiding the stay fixed to the device body up and down, and
a balance spring biasing the stay upwardly,
wherein the stay is supported such that the upper surface of the abutment is positioned below the table by balancing between the weight of the press unit and the biasing force of the balance spring, and
wherein the biasing force of the press rod is applied to the stator on the table, whereby the abutment is raised to a position in contact with the lower surface of the stator core on the table.

3. The conductor bundle separation device according to claim 1, further comprising:
a chuck unit comprising:
a chuck housing having an outer shape capable of passing through the central hole,
a plurality of chuck claws slidable in a radial direction at different angular positions of the chuck housing, and
a rotary actuator for intermittently rotating the chuck housing, and
a linear actuator that moves the chuck unit up and down between three height positions of:
an origin height at which an upper end of the chuck housing is disposed below the table;
a first operating height at which the chuck claws can be engaged with the central hole of the stator placed on the table; and
a second operating height above said first operating height.

4. The conductor bundle separation device according to claim 3, wherein the chuck unit comprises:
a tapered shaft movable up and down in a central shaft hole of the chuck housing,
a cam follower for driving the chuck claws radially outwardly by sliding on the tapered shaft which moves up and down, and
a fluid pressure actuator for driving the tapered shaft up and down in the shaft hole.

5. The conductor bundle separation device according to claim 4, wherein the rotary actuator further comprises:
a hollow rotating shaft, and
a drive fluid line through said hollow rotating shaft,
wherein one end of the drive fluid line is connected to the fluid pressure actuator, and
the other end of the drive fluid line is connected to a swivel joint.

6. The conductor bundle separation device according to claim 1,
wherein the press unit further comprises a guide member having a guide bore formed on the axis for guiding the press rod,
the press rod has a distal end portion and a proximal end portion having a cross-sectional shape having a larger second moment of area than the distal end portion, and
the guide bore has a cross-sectional shape through which both the distal end portion and the proximal end portion can pass.

7. A conductor bundle separation method for separating a conductor bundle from a stator using a conductor bundle separation device,
the stator including a stator core having a central hole and at least one slot therearound and a conductor bundle bonded in said slot;
the conductor bundle separation device comprising a press unit, the press unit comprising:
a stay,
a press rod which is driven up and down by a press actuator on the upper part of the stay, and
an abutment,
wherein the abutment has a hollow portion through which the conductor bundle located on the axis of the press bar can pass, and
wherein said method comprises, in a state in which the slot is aligned with the axis and the lower surface of the stator core is supported by the abutment, inserting the press rod into the slot by the drive of the press actuator to push out the conductor bundle from the slot.
